# EUROPEAN PATENT APPLICATION

(11) **EP 3 757 189 A1**
(43) Date of publication of application: **30.12.2020**
(21) Application number: 19182488.7
(22) Date of filing: 26.06.2019
(51) Int. Cl.: C09K 5/10

(54) **USE OF IONIC LIQUIDS AS COOLANTS FOR VEHICLE ENGINES, MOTORS AND BATTERIES**

(71) Applicant: Evonik Operations GmbH, 45128 Essen (DE)
(72) Inventor: Wang, Xinming, 242-0003 Kanagawa-ken (JP); Aoki, Tetsuji, 350-1115 Saitama-ken (JP); Schneider, Rolf, 63584 Gründau-Rothenbergen (DE); Kerl, Thomas, 45130 Essen (DE); Däschlein, Christian, 44625 Herne (DE)
(74) Representative: Evonik Patent Association

(57) **Abstract**

The invention relates to a process for cooling a power unit in a vehicle. The coolant is an ionic liquid that contains an imidazolium salt. The invention also relates to the coolant and the use of the coolant for cooling the power unit such as a battery or a motor in a vehicle.

## Description

The invention relates to a process for cooling a power unit in a vehicle. The coolant is an ionic liquid that contains an imidazolium salt. The invention also relates to the coolant and the use of the coolant for cooling the power unit such as a battery or a motor in a vehicle.

### Background of the invention

With the mega trend of electrical and electrical/engine hybrid vehicles, high efficiency cooling for batteries and motor is highly demanded. Critical parameters of coolants in this field of application are its operating temperature range, stability, safety, corrosion characteristics and thermal conductivity.

In the context of coolants used for cars, ethylene glycol solutions (as described by D. G. Subhedara, B.M. Ramanib, A. Guptaca, Case Studies in Thermal Engineering 2018, 11, 26 - 34), propylene glycol solutions (as described by M. Gollin, D. Bjork, Comparative Performance of Ethylene Glycol/ Water and Propylene Glycol/Water Coolants in Automobile Radiators, International Congress & Exposition, Detroit, Michigan, February 26-29, 1996, SAE Technical Paper Series, ISSN 0148-7191, DOI 10.4271/960372) or dimethylpolysiloxane (described for example in US 5,100,571 A) have been described.

For these metal materials, the mentioned vehicle coolants, however, have several disadvantages. For example, if a propylene glycol-based coolant is exposed to high temperature of 90 °C for a long time, aldehyde could be generated as a by-product. If such aldehyde is further oxidized, carboxylic acid may be generated, which causes corrosion to equipment.

Likewise, fluoride-containing ionic liquids as those described by F. Wang, L. Han, Z. Zhang, X. Fang, J. Shi, W. Ma, Nanoscale Research Letters 2012, 7, 314-320 have proven to be corrosive.

Furthermore, the fluorine containing chemicals need to be replaced or reduced because of their high global warming potential (GWP).

Therefore, development of more thermal and chemical stable, more compatible with metal materials and more environment friendly coolant remains an important objective especially for the car industry.

The purpose of this invention is therefore to create the best formulation, which consists of the non-corrosive ionic liquid, which in particular can be used as coolant in cars.

Moreover, there is still a demand in the art for other absorption media that provide better heat conductivity and thus better heat transfer.

The present invention accordingly has for its object to further provide coolants that ensure improved heat transfer compared with prior coolants when used in cooling systems in vehicles, in particular cars.

Absorption media have now been found which, surprisingly, fulfil this object.

### Detailed description of the invention

The present invention accordingly relates in a first aspect to a process for cooling a power unit **PU** in a vehicle, wherein a coolant **C** is contacted with the power unit **PU,** so that heat is transferred from **PU** to **C,**
characterized in that
the coolant **C** comprises an ionic liquid **IL**
wherein **IL** is selected from the group consisting of Q⁺A⁻, Q⁺(R¹O)₂PO₂⁻, (Q⁺)₂R²OPO₃²⁻, Q⁺M⁺R³OPO₃²⁻,
wherein
Q⁺ is a dialkylimidazolium cation,
wherein A⁻ is an anion selected from the group consisting of R*COO⁻, R'SO₃⁻, HSO₄⁻, R"SO₄⁻, wherein R*, R', R" are each independently of one another an alkyl group,
wherein R¹, R², R³ are each independently of one another an alkyl group,
and wherein M⁺ is an alkali metal ion, preferably lithium, potassium or sodium.
According to the invention, a "vehicle" is preferably selected from a car, a motorbicycle, ship or a plane, preferably a car.

A power unit **PU** is preferably selected from the group consisting of battery **B,** motor **M,** or engine
Such a power unit typically forms part of the vehicle and provides the energy for moving it. Accordingly, due to the fact that energy is used, heat is created which has to be discharged. This is achieved by the coolant **C.**

As the heat is transferred from **PU** to **C,** this means that **C** has a lower temperature than **PU** when contacting it.

The process according to the first aspect of the invention is preferably carried out at a temperature of - 80 °C to 100 °C, more preferably at a temperature of - 70 °C to 100 °C, more preferably at a temperature of - 60 °C to 100 °C, more preferably at a temperature of - 50 °C to 100 °C, more preferably at a temperature of - 40 °C to 90 °C, more preferably at a temperature of - 60 °C to 90 °C, more preferably at a temperature of - 20 °C to 70 °C.

In a further preferred embodiment of the invention, the power unit **PU** is contacted by the ionic liquid **IL** via a metal surface **S_{M}** so that heat is transferred from **PU** to C via **S_{M}.** Even more preferably, the metal in the metal surface **S_{M}** is selected from aluminium, steel, copper, noble metals, titanium, even more preferably copper, aluminium, steel, even more preferably copper, aluminium.

Aluminium in the context of the present invention is to be understood as meaning both unalloyed aluminium and aluminium alloys where in particular the mass fraction of aluminium is greater than the mass fraction of every other element. The aluminium material is preferably unalloyed aluminium.

Unalloyed aluminium is in particular aluminium having a purity of > 80 wt.-%, more preferably > 85 wt.-%, yet more preferably > 90 wt.-%, yet still more preferably > 95 wt.-%, yet still more preferably > 98 wt.-%. It is in particular highest purity aluminium having a purity of > 99.0 wt.-%, more preferably > 99.5 wt.-%, more preferably > 99.9 wt.-%.

Aluminium alloys comprise in addition to the aluminium in particular at least one alloying metal selected from the group consisting of magnesium, manganese, silicon, zinc, lead, copper, titanium, iron, more preferably selected from the group consisting of magnesium, manganese, silicon, zinc, lead, copper, titanium. The aluminium material of construction may then in particular be in the form of a wrought alloy or of a cast alloy.

"Steel" in the context of the present invention is to be understood as meaning in particular any iron alloy where the mass fraction of iron is greater than the mass fraction of every other element present. The proportion of iron in the steel material of construction is preferably > 50 wt.-%, more preferably ≥ 60 wt.-%, yet more preferably ≥ 70 wt.-%, yet more preferably ≥ 80 wt.-%, yet more preferably ≥ 99 wt.-%. In accordance with the invention in addition to iron the steel material of construction comprises in particular at least one alloying metal selected from the group consisting of nickel, chromium, vanadium, molybdenum, niobium, tungsten, cobalt, magnesium, manganese, silicon, zinc, lead, copper, titanium, more preferably selected from the group consisting of nickel, chromium, vanadium, molybdenum, niobium, tungsten, cobalt, magnesium, manganese, titanium, particularly chromium, wherein this yet more preferably has a mass fraction in the steel material of construction 20 greater than 10.5 wt.-% but smaller than 50 wt.-%. It is yet more preferable when at the same time the carbon content in the steel material of construction is then always < 2.06 wt.-%, yet more preferably ≤ 1.2 wt.-%. It will be appreciated that the sum of the contents of iron, alloying metal (for example chromium) and carbon in the steel material of construction must not exceed 100 wt.-%. 25 The steel material of construction may in particular be in the form of a wrought alloy or of a cast alloy.

"Platinum" in the context of the present invention is to be understood as meaning both unalloyed platinum and platinum alloys where in particular the mass fraction of platinum is greater than the mass fraction of every other element. The platinum material is preferably unalloyed platinum.

Unalloyed platinum is in particular platinum having a purity of > 80 wt.-%, more preferably > 85 wt.-%, yet more preferably > 90 wt.-%, yet still more preferably > 95 wt.-%, yet still more preferably > 98 wt.-%. It is in particular highest purity platinum having a purity of > 99.0 wt.-%, more preferably > 99.5 wt.-%, more preferably > 99.9 wt.-%.

Platinum alloys comprise in addition to the platinum in particular at least one alloying metal selected from the group consisting of magnesium, manganese, silicon, zinc, lead, copper, titanium, iron, more preferably selected from the group consisting of magnesium, manganese, silicon, zinc, lead, copper, titanium.

The description for platinum applies mutatis mutandis for other noble metals such as silver, gold, and also for other metals such as copper, titanium.

A "dialkyl imidazolium" cation according to the invention is preferably a 1,3-dialkylimidazolium cation.

In a preferred embodiment of the process according to the invention the ionic liquid IL is selected from the group consisting of Q⁺A⁻, Q⁺(R¹O)₂PO₂⁻, preferably the ionic liquid IL is Q⁺(R¹O)₂PO₂⁻, and Q⁺ is a dialkylimidazolium cation in which the alkyl groups each independently of one another have 1 to 6, preferably 1 or 4, more preferably 1 or 2 carbon atoms, and A⁻ is an anion selected from the group consisting of R*COO⁻, R'SO₃⁻, R"SO₄⁻, wherein R*, R¹, R', R", are each independently of one another an alkyl group having 1 to 6, preferably 1 to 4, more preferably 1 or 2, carbon atoms.

In a more preferred embodiment of the process according to the invention, the ionic liquid IL has the general formula Q⁺(R¹O)₂PO₂⁻, and Q⁺ is a dialkylimidazolium cation in which the alkyl groups are each independently of one another selected from the group consisting of methyl, ethyl, butyl, even more preferably selected from the group consisting of methyl or ethyl, and R¹ is methyl or ethyl.

In a yet more preferred embodiment of the process according to the invention, the ionic liquid IL has the general formula Q⁺(R¹O)₂PO₂⁻, and Q⁺ is selected from the group consisting of 1,3-dimethylimidazolium, 1,3-diethylimidazolium, 1-ethyl-3-methylimidazolium; R¹ is methyl or ethyl. Most preferably, the ionic liquid **IL** is 1-ethyl-3-methylimidazolium diethylphosphate.

In a further preferred embodiment, the coolant **C** contains a corrosion inhibitor **A.** Preferably, the corrosion inhibitor **A** is selected from benzotriazole, thiazolyl blue tetrazolium bromide, a fatty acid. The fatty acid is more preferably stearic acid.

"Benzotriazole" (abbreviated as "BTA"; CAS-No.: 95-14-7), "thiazolyl blue tetrazolium bromide" (abbreviated as "MTT"; CAS-No.: 298-93-1) and fatty acids (abbreviated as "FAA") have the following structures: 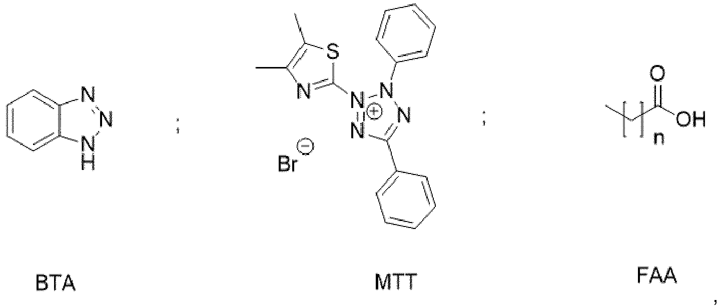 wherein in the case of the FAA, n is an integer between 6 and 30, preferably 8 and 28, more preferably 10 and 20, more preferably 14 and 18, more preferably 16. For n = 16, FAA is stearic acid, and stearic is the most preferred fatty acid.

It was surprisingly shown that the use of corrosion inhibitors reduces the corrosiveness against metals, especially copper.

The most preferable corrosion inhibitor **A** is benzotriazole.

In a more preferred embodiment according to the present invention, the coolant **C** comprises at least one ionic liquid **IL** as described above, and at least two, preferably at least three corrosion inhibitors **A** selected from the group consisting of benzotriazole, thiazolyl blue tetrazolium bromide, a fatty acid, which is preferably stearic acid. When the coolant **C** comprises two corrosion inhibitors **A** which are preferably selected from the group consisting of benzotriazole, thiazolyl blue tetrazolium bromide, a fatty acid, which is preferably stearic acid, it is further preferred that the ratio of the total weight of the first additive to the total weight of the second additive in the coolant **C** is in the range of 99 : 1 to 1 : 99, more preferably 9 : 1 to 1 : 9, preferably 8 : 2 to 2 : 8, more preferably 7 : 3 to 3 : 7, more preferably 6 : 4 to 4 : 6, most preferably 1 : 1. When the coolant **C** comprises three corrosion inhibitors **A** which are preferably selected from the group consisting of benzotriazole, thiazolyl blue tetrazolium bromide, a fatty acid, which is preferably stearic acid, it is further preferred that the ratio of the total weight of all ionic liquids **IL** to the total weight of all compounds of the first additive to the total weight of the second additive to the total weight of the third additive is 100 : 1 : 1 : 1.

In those cases in which the coolant C comprises two, three or more corrosion inhibitors **A** which are preferably selected from the group consisting of benzotriazole, thiazolyl blue tetrazolium bromide, a fatty acid, which is preferably stearic acid, it is further preferred that the first of the corrosion inhibitors **A** is BTA, and more preferably the second of the corrosion inhibitors **A** is MTT.

The coolant **C** may, in the process according to the invention, be employed in the form of the pure mixture of the ionic liquid **IL** with the corrosion inhibitor **A.** Alternatively and more preferably in the process according to the invention, the coolant **C** is an aqueous solution in which, in particular, the total weight of all corrosion inhibitors **A** which are in particular selected from the group consisting of benzotriazole, thiazolyl blue tetrazolium bromide, a fatty acid, and all ionic liquids **IL** is in the range from 20.1 wt.-% to 92 wt.-% based on the total weight of the aqueous solution. It is yet more preferable when the total weight of all corrosion inhibitors **A** which are in particular selected from the group consisting of benzotriazole, thiazolyl blue tetrazolium bromide, a fatty acid, and all ionic liquids **IL** in the coolant **C** is in the range from 20.5 wt.-% to 90.5 wt.-% based on the total weight of the aqueous solution, yet more preferably in the range from 30.5 wt.-% to 80.5 wt.-%, yet more preferably 40.0 wt.-% to 76 wt.-% % based on the total weight of the aqueous solution, yet more preferably 50.5 to 51.0 wt.-% based on the total weight of the aqueous solution.

In the process according to the invention the ratio of all compounds of all corrosion inhibitors, particularly selected from the group consisting of benzotriazole, thiazolyl blue tetrazolium bromide, a fatty acid, to the ionic liquids **IL** in the coolant **C** is not further restricted. However, it is preferable to employ in the process according to the invention an coolant **C** in which the ratio of the total weight of all corrosion inhibitors **A** which are in particular selected from the group consisting of benzotriazole, thiazolyl blue tetrazolium bromide, a fatty acid, to the total weight of all ionic liquids **IL** is in the range 1 : 1000 to 1:10, more preferably 1 : 500 to 1 : 19, more preferably 1 : 180 to 1 : 39, yet more preferably 1 : 159 to 1 : 75, more preferably 1 : 150 to 1 : 79, even more preferably 1 : 119 to 1 : 100.

In an alternative embodiment, the coolant **C** further comprises microparticles and/or nanoparticles of a solid **F.**

Preferred solids are Al₂O₃, Silica, graphene or graphite.

Microparticles and nanoparticles are known and available to the skilled person.

They can for example be obtained as described by D. G. Subhedara, B.M. Ramanib, A. Guptaca, Case Studies in Thermal Engineering 2018, 11, 26 - 34 from nanopowder, which can be obtained.

Nanoparticles of Silica (another expression for SiO₂) can for example be obtained from Sigma Adrich (CAS-No.: 7631-86-9).

Nanoparticles of Al₂O₃ can for example be obtained from Sigma Aldrich (CAS No.: 1344-28-1).

Nanoparticles of graphene or graphite can for example be obtained from Sigma Aldrich (for example CAS-No.: 1333-86-4).

The microparticles of the present invention have preferably the following properties: at least 50% of all the microparticles have a particle size of ≤ 100 µm, preferably of ≤ 75 µm, more preferably ≤ 50 µm. At the same time, especially at least 50% of all the microparticles have a particle size of have a particle size in the range of 1 µm to 100 µm, preferably 1 µm to 75 µm, more preferably 1 µm to 50 µm. Most preferably, 95% of the particles have a particle size of ≤ 25 µm; in particular, 95% of the particles have a particle size in the range of 1 µm to 25 µm.

The nanoparticles of the present invention have preferably the following properties: at least 50% of all the nanoparticles have a particle size of ≤ 100 nm, preferably of ≤ 75 nm, more preferably ≤ 50 nm. At the same time, especially at least 50% of all the particles of the all the nanoparticles have a particle size in the range of 1 nm to 100 nm, preferably 1 nm to 75 nm, more preferably 1 nm to 50 µm. Most preferably, 95% of the particles have a particle size of ≤ 40 nm; in particular, 95% of the particles have a particle size in the range of 1 nm to 25 nm.

Particle sizes can be determined with methods known to the skilled person, for example the onme described in ISO 13320:2009(en).

When the coolant **C** further comprises microparticles and/or nanoparticles of a solid **F,** preferably, the total weight of all microparticles and nanoparticles of a solid **F,** particularly of a compound selected from the group consisting of graphene, SiO₂ and Al₂O₃, and all ionic liquids **IL** is in the range from 20.1 wt.-% to 92 wt.-% based on the total weight of the aqueous solution. It is yet more preferable when the total weight of all microparticles and nanoparticles of a solid **F,** particularly of a compound selected from the group consisting of graphene, SiO₂ and Al₂O₃, and all ionic liquids **IL** in the coolant **C** is in the range from 20.5 wt.-% to 90.5 wt.-% based on the total weight of the aqueous solution, yet more preferably in the range from 30.5 wt.-% to 80.5 wt.-%, yet more preferably 40.0 wt.-% to 76 wt.-% % based on the total weight of the aqueous solution, yet more preferably 50.5 to 51.0 wt.-% based on the total weight of the aqueous solution.

When the coolant **C** further comprises microparticles and/or nanoparticles of a solid F, the ratio of all compounds of all microparticles and nanoparticles of a solid **F,** preferably selected from graphene, SiO₂ and Al₂O₃, to the ionic liquids **IL** in the coolant **C** is not further restricted. However, it is preferable to then employ in the process according to the invention an coolant **C** in which the ratio of the total weight of all microparticles and nanoparticles of a solid **F** preferably selected from the group consisting of graphene, SiO₂ and Al₂O₃ to the total weight of all ionic liquids **IL** is in the range 1 : 1000 to 1:10, more preferably 1 : 500 to 1 : 19, more preferably 1 : 180 to 1 : 39, yet more preferably 1 : 159 to 1 : 75, more preferably 1 : 150 to 1 : 79, even more preferably 1 : 200 to 1 : 100.

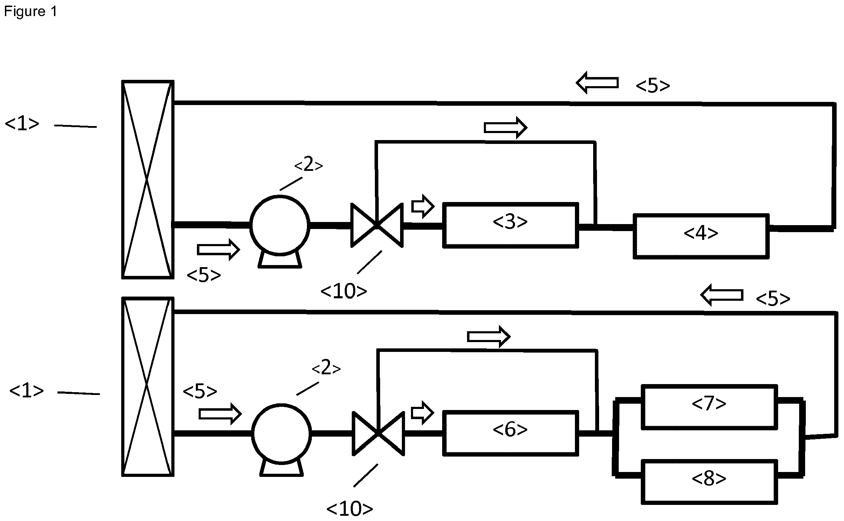

The process according to the invention can be carried out in an apparatus as shown in Figure 1, which is a preferred embodiment of the invention. This shows a simplified version of the cooling cycle as can be found in a car containing a motor (upper part of Figure 1) or a battery (lower part of Figure 1).

In the upper system, the coolant **C** <5> is pumped through the system by an electric liquid pump <2>. The arrows indicate the flow of the coolant **C.** In the upper part of Figure 1, the coolant **C** <5> passes a three-way valve <10> and is pumped to a motor **M** <3>. Here it takes up heat and thereafter optionally passes an invertor <4>. The invertor <4> is only an optional embodiment and can be omitted. The coolant **C** <5> then is pumped to a heat radiator <1>, where the heat taken up from the motor **M** <3> is at least partially dissipated to the environment, and then the coolant **C** <5> can be used in a new cycle. In case no heat removal from the motor **M** <3> is necessary, the three-way valve <10> is oriented so the coolant **C** <5> does not contact the motor **M** <3>.

In the lower part of Figure 1, a system containing a battery is shown. Here, the coolant **C** <5> is pumped through the system by an electric liquid pump <2>. The arrows indicate the flow of the coolant **C.** In the lower part of Figure 1, the coolant **C** <5> passes a three-way valve <10> and is pumped to a battery **B** <6>. Here it takes up heat and optionally passes a battery charger <7> or a DC-DC convertor <8>. The battery charger <7> as well as the DC-DC convertor <8> are optional embodiments, and both can be omitted. The coolant **C** <5> then is pumped to a heat radiator <1>, where the heat is dissipated to the environment, and then the coolant **C** <5> can be used in a new cycle. In case no heat removal from the battery **B** <6> is necessary, the three-way valve <10> is oriented so the coolant **C** <5> does not contact the motor **M** <3>.

The present invention also relates in a second aspect to a coolant **C** as described in the context of the first aspect.

The present invention also relates in a third aspect to the use of a Coolant **C** according to the second aspect for cooling a power unit **PU,** wherein the power unit **PU** is preferably selected from the group consisting of battery **B,** motor **M,** in a vehicle, wherein the vehicle is preferably a car.

The examples which follow are intended to elucidate the present invention without limiting said invention in any way.

### Examples

### 1. Determination of operating temperature ranges

In this test series, the operating temperatures (namely, the solidification points and the decompositions points) of several prior art coolants were compared to those of the present invention.

The following formulations were used:
Formulation A: 50 wt.-% ethylene glycol in water.
Formulation B: 50 wt.-% propylene glycol in water.
Formulation C: 50 wt.-% dimethylpolysiloxane.
Formulation D: 20 wt.-% EMIM DEP (= 1-ethyl-3-methylimidazolium diethylphosphate) in water.
Formulation E: 50 wt.-% EMIM DEP in water.
Formulation F: 80 wt.-% EMIM DEP in water.
Formulation G: 100 wt.-% EMIM DEP.

| Example | Formulation tested | Minimum temperature (°C) | Maximum temperature (°C) |
|---|---|---|---|
| **C1** | A | - 20 | + 30 |
| **C2** | B | - 40 | + 60 |
| **C3** | C | - 40 | + 90 |
| **I1** | D | - 50 | + 100 |
| **I2** | E | - 60 | +100 |
| **I3** | F | - 70 | + 100 |
| **I4** | G | - 80 | +100 |

From the comparison of **I1** to **I4** with any of **C1** to **C3,** it follows that the coolant according to the invention has the largest operating temperature range and therefore is surprisingly well suited for a coolant in a vehicle.

### 2. Corrosion performance to aluminium

At 70°C and under air, aluminium plates (highest purity aluminium, purity > 99.0%) having dimensions of 3 cm x 7 cm and a thickness of 3 mm were immersed in 350 ml of the respective solution. The liquid was stirred during the test to ensure uniform flow of the liquid around the metal plates. Determination of the removal rates (removal rate = "loss due to corroded aluminium", reported in the following table in the unit mm/year) was carried out gravimetrically after chemical and mechanical removal of the corrosion products from the immersed aluminium plates. The results are shown in the table which follows.

| | Formulation tested | Corrosion rate (mm/year) |
|---|---|---|
| **C4** | water | 1.00 |
| **I5** | D | 0.64 |
| **I6** | E | 0.27 |
| **I7** | F | 0.16 |
| **I8** | G | 0.14 |

These results show that the corrosion rate on aluminium can be remarkedly reduced when EMIM DEP instead of water is used.

### 3. Corrosion performance to copper

Formulation E was an aqueous solution of 50 weight-% EMIM DEP, used in Comparative Example **C5.**

Formulation J was an aqueous solution of 50 weight-% EMIM DEP and 0.5 weight-% BTA, used in Inventive Example **I9.**

Formulation K was an aqueous solution of 50 weight-% EMIM DEP and 0.5 weight-% stearic acid, used in Inventive Example **I10.**

Formulation L was an aqueous solution of 50 weight-% EMIM DEP and 0.5 weight-% MTT, used in Inventive Example **I11.**

Formulation M was an aqueous solution of 50 weight-% EMIM DEP and 0.5 weight-% BTA and 0.5 weight-% stearic acid, used in Inventive Example **I12.**

Formulation N was an aqueous solution of 50 weight-% EMIM DEP and 0.5 weight-% BTA and 0.5 weight-% MTT, used in Inventive Example **I13.**

Formulation P was an aqueous solution of 50 weight-% EMIM DEP and 0.5 weight-% stearic acid and 0.5 weight-% MTT, used in Inventive Example **I14.**

At 70°C and under air, copper plates (highest purity copper, purity > 99.0%) having dimensions of 3 cm x 7 cm and a thickness of 3 mm were immersed in 350 ml of the respective solution. The liquid was stirred during the test to ensure uniform flow of the liquid around the metal plates. Determination of the removal rates (removal rate = "loss due to corroded copper", reported in the following table in the unit mm/year) was carried out gravimetrically after chemical and mechanical removal of the corrosion products from the immersed aluminium plates. The results are shown in the table which follows.

| Example | Corrosion rate (mm/year) |
|---|---|
| **C5** | 0.41 |
| **I9** | 0.06 |
| **I10** | 0.05 |
| **I11** | 0.03 |
| **I12** | 0.02 |
| **I13** | 0.01 |
| **I14** | 0.04 |

The results show that the absorption media according to the invention exhibit a much smaller corrosiveness towards copper (**C5** viz. **I9** to **I14**) and in addition the corrosion is even less when BTA is used in addition to another additive (**I12** and **I13** as compared to **I14**), wherein the BTA and MTT combination is the least corrosive and therefore most preferred.

### 4. Improvement of heat transfer efficiency by used of nanoparticle solution

Nanoparticles of Silica (another expression for SiO₂) were obtained from Sigma Aldrich (CAS-No.: 7631-86-9).

Nanoparticles of Al₂O₃ were obtained from Sigma Aldrich (CAS-No.: 1344-28-1).

Nanoparticles of graphene were obtained from Sigma Aldrich (CAS-No.: 1333-86-4).

Formulation E was an aqueous solution of 50 weight-% EMIM DEP, used in Comparative Example **C6.**

Formulation Q was an aqueous solution of 50 weight-% EMIM DEP and 0.5 weight-% nanoparticle SiO₂, used in Inventive Example **I15.**

Formulation R was an aqueous solution of 50 weight-% EMIM DEP and 0.5 weight-% nanoparticle Al₂O₃, used in Inventive Example **I16.**

Formulation S was an aqueous solution of 50 weight-% EMIM DEP and 0.5 weight-% nanoparticle graphene, used in Inventive Example **I17.**

The heat transfer efficiency was measured by standard methods and is shown in the following table.

| Example | Thermal conductivity (W/m/K) |
|---|---|
| **C6** | 0.38 |
| **I15** | 0.44 |
| **I16** | 0.52 |
| **I17** | 0.47 |

The results show that the absorption media according to the invention exhibit a much better thermal conductivity and thus heat transfer efficiency (**C6** viz. **I15** to **I17**) and in addition it is best for Al₂O₃ (**I16** compared to **I15** and **I17**).

## Claims

1. Process for cooling a power unit **PU** in a vehicle, wherein a coolant **C** is contacted with the power unit **PU,** so that heat is transferred from **PU** to **C,**
**characterized in that**
the coolant **C** comprises an ionic liquid **IL**
wherein **IL** is selected from the group consisting of Q⁺A⁻, Q⁺(R¹O)₂PO₂⁻, (Q⁺)₂R²OPO₃²⁻, Q⁺M⁺R³OPO₃²⁻,
wherein
Q⁺ is a dialkylimidazolium cation,
wherein A⁻ is an anion selected from the group consisting of R*COO⁻, R'SO₃⁻, HSO₄⁻, R"SO₄⁻, wherein R*, R', R" are each independently of one another an alkyl group,
wherein R¹, R², R³ are each independently of one another an alkyl group,
and wherein M⁺ is an alkali metal ion.

2. Process according to Claim 1, wherein the power unit **PU** is selected from the group consisting of battery **B,** motor **M.**

3. Process according to Claim 1 or 2, wherein the power unit **PU** is contacted by the ionic liquid **IL** via a metal surface **S_{M}** so that heat is transferred from **PU** to **C** via **S_{M}.**

4. Process according to Claim 3, wherein the metal in the metal surface **S_{M}** is selected from aluminium, steel, copper, noble metals, titanium.

5. Process according to any of Claims 1 to 4, wherein the **IL** has the general formula Q⁺(R¹O)₂PO₂⁻, and Q⁺ is selected from the group consisting of 1,3-dimethylimidazolium, 1,3-diethylimidazolium, 1-ethyl-3-methylimidazolium; R¹ is methyl or ethyl.

6. Process according to any of Claims 1 to 5, wherein the coolant **C** further comprises at least one corrosion inhibitor **A.**

7. Process according to Claim 6, wherein the corrosion inhibitor **A** is selected from benzotriazole, thiazolyl blue tetrazolium bromide, a fatty acid.

8. Process according to any of Claims 1 to 5, wherein the coolant **C** further comprises microparticles and/or nanoparticles of a solid **F.**

9. Process according to Claim 8, wherein the solid **F** is selected from the group consisting of graphene, graphite, Al₂O₃, SiO₂.

10. Coolant **C** for cooling a power unit **PU** in a vehicle comprising an ionic liquid **IL**
wherein **IL** is selected from the group consisting of Q⁺A⁻, Q⁺(R¹O)₂PO₂⁻, (Q⁺)₂R²OPO₃²⁻, Q⁺M⁺R³OPO₃²⁻,
wherein Q⁺ is a dialkylimidazolium cation,
wherein A⁻ is an anion selected from the group consisting of R*COO⁻, R'SO₃⁻, HSO₄⁻, R"SO₄⁻, wherein R*, R', R" are each independently of one another an alkyl group,
wherein R¹, R², R³ are each independently of one another an alkyl group,
and wherein M⁺ is an alkali metal ion.

11. Coolant **C** according to Claim 10, wherein the coolant **C** further comprises a corrosion inhibitor.

12. Coolant **C** according to Claim 11, wherein the corrosion inhibitor is selected from benzotriazole, thiazolyl blue tetrazolium bromide, a fatty acid.

13. Coolant **C** according to Claim 10, wherein the coolant **C** further comprises microparticles and/or nanoparticles of a solid **F.**

14. Coolant **C** according to Claim 8, wherein the solid **F** is selected from the group consisting of graphene or graphite, Al₂O₃, SiO₂.

15. Use of a Coolant **C** according to any of Claims 10 to 14 for cooling a power unit **PU** in a vehicle.
